(19) Europäisches Patentamt
European Patent Office
Office européen des brevets

(11) **EP 3 069 779 A1**

(12) **EUROPÄISCHE PATENTANMELDUNG**

(43) Veröffentlichungstag:
**21.09.2016  Patentblatt 2016/38**

(51) Int Cl.:
**B01D 53/04** *(2006.01)*

(21) Anmeldenummer: **15000818.3**

(22) Anmeldetag: **19.03.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Linde Aktiengesellschaft**
**80331 München (DE)**

(72) Erfinder: **Lautenschlager, Tobias**
**82194 Gröbenzell (DE)**

(74) Vertreter: **Kasseckert, Rainer**
**Linde AG**
**Legal Services Intellectual Property**
**Dr.-Carl-von-Linde-Strasse 6-14**
**82049 Pullach (DE)**

(54) **Verfahren zur adsorptiven Entfernung einer Komponente aus einem Gasgemisch**

(57) Die Erfindung betrifft ein Verfahren zur adsorptiven Entfernung einer Komponente (K) aus einem Gasgemisch (G), wobei während einer Adsorptionsphase (10) das Gasgemisch (G) durch ein Molekularsieb (2) geleitet wird und die Komponente (K) an dem Molekularsieb (2) adsorbiert wird, wobei während der Adsorptionsphase (10) die Menge pro Zeiteinheit (n/t), die Temperatur (T) und der Druck (p) des Eintrittsgasgemischs (G) sowie die Konzentration der Komponente (K) in dem Eintrittsgasgemisch (G) wiederholt gemessen (20) werden und mit Hilfe dieser Messwerte die bereits erfolgte Beladung des Molekularsiebes (2) mit der Komponente (K) sowie eine Restlaufzeit ($t_{rest}$) des Molekularsiebes (2) berechnet wird (30), die bis zu einer vordefinierten Endbeladung des Molekularsiebes (2) verbleibt, und wobei anschließend während einer Regenerierungsphase (60) ein heißes Regeneriergas (R) durch das Molekularsieb (2) geleitet wird, und die Komponente (K) vom Molekularsieb (2) desorbiert wird, wobei die zur Regenerierung benötigte Regeneriergasmenge ($n_R$) sowie die Zeitdauer ($t_{reg}$) der Regenerierungsphase (60) unter Berücksichtigung der berechneten Beladung (B(T)) des Molekularsiebes (2) sowie der Temperatur ($T_R$) des Regeneriergases (R) berechnet wird (50).

Fig. 1

**Beschreibung**

Die Erfindung betrifft ein Verfahren zur adsorptiven Entfernung zumindest einer Komponente aus einem Gasgemisch.

Derartige Verfahren zur adsorptiven Entfernung wenigstens einer Komponente aus einem wenigstens zweikomponentigen Gasgemisch werden z.B. bei der Entfernung von $H_2O$ und/oder $CO_2$ aus einem Stoffstrom verwendet, der kryogen zerlegt werden soll, um ein Ausfrieren dieser Komponenten in der kryogenen Zerlegung zu verhindern. Eine weitere Anwendung besteht z.B. in der Trocknung von Erdgasen.

Bei solchen adsorptiven Verfahren werden in der Regel Molekularsiebe (auch kurz Molsiebe) verwendet. Hierunter werden insbesondere natürliche und synthetische Zeolithe oder andere Stoffe verstanden, die ein starkes Adsorptionsvermögen für Gase, Dämpfe oder gelöste Stoffe mit bestimmten Molekülgrößen aufweisen. Durch eine geeignete Wahl des Molekularsiebes ist es möglich, Moleküle verschiedener Größen zu trennen. Molekularsiebe weisen eine große innere Oberfläche auf (z.B. 600 bis 700 $m^2$/g) und verfügen insbesondere über einheitliche Porendurchmesser, die in der Größenordnung der Durchmesser von Molekülen liegen. Der Porendurchmesser kann z.B. im Bereich von 0,3nm bis 1 nm liegen.

Neben den oben genannten Verbindungen wie $H_2O$, $CO_2$ können mittels Molsieben natürlich auch andere Verbindungen, wie z.B. $N_2O$, $C_2H_2$ und weitere längerkettige Kohlenwasserstoffe aus einem Gasgemisch abgetrennt werden.

Die Laufzeit eines Molsiebs hängt primär vom Wasser- und/oder $CO_2$-Gehalt der eintretenden Luft bzw. des in das Sieb eintretenden Gasgemischs ab. Die Berechnung der Laufzeit des Molsiebes, d.h. der Zeitdauer der Adsorptionsphase bis zu einer vollständigen Beladung des Molsiebes mit der zu entfernenden Komponente bzw. bis zu einer vordefinierten Endbeladung des Molekularsiebes erfolgt für gewöhnlich durch Simulationsprogramme. Zentrale Randbedingungen für die Simulation sind Menge, Druck, Temperatur und $CO_2$-Gehalt der eintretenden Luft, wobei neben der Laufzeit auch die zur Regeneration benötigte Regeneriergasmenge berechnet wird. Diese theoeretisch berechneten Werte dienen als Grundlage für die Einstellung von Laufzeit und Regeneriergasmenge auf der realen Anlage. Aus einer derartigen Simulation wird für gewöhnlich eine Strompunktliste extrahiert bzw. erstellt und gibt für alle relevanten Prozessströme Mengen, Druck, Temperatur, sowie deren Zusammensetzung an). Weichen im Betrieb die realen Randbedingungen der eintretenden Luft von den Randbedingungen der Simulation stark ab, (z.B. durch veränderte Luftmengen, Temperaturen, Drücke oder $CO_2$-Konzentrationen) so sind die vom Simulator berechneten Größen "Laufzeit und Regeneriergasmenge" nicht mehr gültig.

Zum Regenerieren des Molsiebs wird nach der Adsorptionsphase das Molsieb mit einem heißen Regeneriergas beaufschlagt, so dass die adsorbierte Komponente desorbiert wird. Die benötigte Regeneriergasmenge hängt ebenfalls von den Eintrittsbedingungen ins Molsieb sowie von der Regeneriergastemperatur ab und wird vorzugsweise per Simulation berechnet, siehe oben.

Die so berechneten Laufzeiten und Regeneriergasmengen werden in die Strompunktliste / Verfahrensberechnung übernommen und legen so die Basis für die spätere Festlegung der Größen während der Inbetriebnahme.

In der Realität schwankt insbesondere die Kühlwassertemperatur im Jahresverlauf, zudem kann der reale $CO_2$-Wert stark von den theoretisch angenommenen Konzentrationen abweichen. Auch ist die reale Regeneriergastemperatur am Eintritt ins Molsieb unter Umständen höher als der theoretische Designwert, da Wärmeverluste in der Regel konservativ abgeschätzt werden. Eine Anpassung der Molsieblaufzeit und der Regeneriergasmenge pro Zeiteinheit (z.B. in mol/s), die während der Regenerierung das Molsieb kontinuierlich durchströmt, kann z.B. in einem Leitsystem eingestellt werden. Rein physikalisch wird zur vollständigen Regeneration des Molsiebs (MS) in erster Näherung nur eine bestimmte Wärmemenge, also eine Gesamtmenge (mol) an Molekülen benötigt, die Wärme auf das MS-Material übertragen. Diese Gesamtmenge ist das Integral aus Mengenstrom und Regenerierzeit. Im realen Anlagenbetrieb werden vorzugsweise sowohl der Regeneriergasmengenstrom als auch Regenerierzeit an die Molsieb-Eintrittsbedingungen angepasst. Dies kann durch einen Operator vorgenommen werden, wobei in der Praxis meistens die Werte nicht richtig angepasst werden.

Die Einstellung der Molsieblaufzeit und der Regeneriergasmengen werden also in der Praxis nicht immer optimal auf die realen Verhältnisse angepasst, was die verwendete Heizleistung unvorteilhafter Weise steigert. Insbesondere bei Kohlevergasungsprojekten mit lokalen $CO_2$-Emissionen ist weiterhin je nach Windrichtung und Umgebungstemperatur mit großen Schwankungen der $CO_2$-Konzentration zu rechnen, so dass die maximale Beladung des Molsiebs bereits vor Ablauf der Design-Laufzeit erreicht werden kann. Hier ist eine Überwachung durch den Operator kaum möglich, da die $CO_2$-Beladung des Molsiebs kumuliert betrachtet werden muss.

Der Erfindung liegt daher die Aufgabe zu Grunde, ein Verfahren der eingangs genannten Art bereitzustellen, das die vorgenannten Nachteile zumindest teilweise mindert.

Diese Aufgabe wird durch ein Verfahren zur adsorptiven Entfernung einer Komponente aus einem Gasgemisch gemäß Anspruch 1 gelöst.

Ausgestaltungen des erfindungsgemäßen Verfahrens sind in den Unteransprüchen angegeben bzw. werden nachfolgend beschrieben.

Erfindungsgemäß sieht das Verfahren gemäß Anspruch 1 vor, dass während einer Adsorptionsphase das Gasgemisch durch ein Molekularsieb geleitet wird und die Komponente an dem Molekularsieb adsorbiert wird, wobei während der Adsorptionsphase die Menge pro Zeiteinheit des Eintrittsgasgemischs, die Temperatur des Eintrittsgasgemischs, der Druck des Eintrittsgasgemischs sowie die Konzentration der Komponente in dem Eintrittsgasgemisch wiederholt gemessen wird, z.B. in regelmäßigen Abständen, und mit Hilfe dieser Messwerte die bereits erfolgte bzw. momentane Beladung des Molekularsiebes mit der Komponente sowie eine momentane Restlaufzeit des Molekularsiebes berechnet wird, die bis zu einer vordefinierten Endbeladung des Molekularsiebes (z.B. vollständige Beladung des Molsiebes mit der zu entfernenden Komponente) verbleibt, und wobei anschließend während einer Regenerierungsphase ein heißes Regeneriergas durch das Molekularsieb geleitet wird und die Komponente vom Molekularsieb desorbiert wird, wobei die zur Regenerierung benötigte Regeneriergasmenge sowie die Zeitdauer der Regenerierungsphase unter Berücksichtigung der berechneten bzw. real erfolgten Beladung des Molekularsiebes sowie der Temperatur des Regeneriergases berechnet wird.

Der Begriff Eintrittsgasgemisch bezeichnet das Gasgemisch stromauf des Molsiebes, d.h., vor dem Einleiten in das Molsieb.

Gemäß einer Ausführungsform des erfindungsgemäßen Verfahrens ist vorgesehen, dass das Gasgemisch Luft ist oder Luft aufweist.

Gemäß einer Ausführungsform des erfindungsgemäßen Verfahrens ist vorgesehen, dass es sich bei der adsorptiv zu entfernenden Komponente um $CO_2$ handelt.

Insbesondere umfasst das erfindungsgemäße Verfahren zur adsorptiven Entfernung zwei Molekularsiebe (z.B. in Form von sog. Molsiebstationen), von denen jeweils das eine Molekularsieb das gereinigte Produkt zur Weiterverarbeitung abgibt, während das andere Molekularsieb regeneriert wird. Die thermische Regenerierung besteht üblicherweise (insbesondere neben einer kurzen Druckabbauphase zu Beginn der Regenerierung sowie insbesondere einer ebenfalls kurzen Druckaufbauphase am Ende der Regenerierung) aus einer Heiz- und insbesondere einer Kühlphase. Im Falle eines einer Luftzerlegungsanlage vorgeschalteten Molsiebes wird als Regeneriergas z.B. ein Stickstoffstrom verwendet, der in dem Luftzerleger gewonnen werden kann.

Aufgrund des erfindungsgemäßen Verfahrens kann das Molsieb bzw. eine entsprechende Molsiebstation gesteuert gefahren werden, d.h., der Operator muss nicht mehr Regeneriergasmengen und Zeiten angeben, sondern die erfindungsgemäße Steuerung berechnet die relevanten Größen abhängig von den momentanen Prozess- und Umgebungsgrößen. Gemäß einer Variante der Erfindung überwacht eine übergeordnete Regelung die Qualität der Steuerung und passt gegebenenfalls die Steuerungsparameter an.

Gemäß einer Ausführungsform der Erfindung ist bei der erfindungsgemäßen Steuerung bevorzugt vorgesehen:

- Messung der Menge des pro Zeiteinheit in das Molsieb eintretenden Eintrittsgasgemischs, sowie des Druck des Eintrittsgasgemischs, der Temperatur des Eintrittsgasgemischs und des $CO_2$-Gehalts des Eintrittsgasgemischs (bzw. des Gehalts der absorptiv zu entfernenden Komponente),
- eine Berechnung der Molsieb-Laufzeit bzw. -Restlaufzeit sowie der benötigten Regeneriergasmenge, insbesondere anhand zumindest eines oder mehrerer Modelle,
- eine Justierung einer oder mehrerer der berechneten Größen mit je einem Tuningparameter, z.B. durch Multiplikation jener Größen mit einem zugeordneten Tuningparameter bzw. -faktor.

Bei der besagten übergeordneten Regelung bzw. Überwachung erfolgt bevorzugt

- eine Messung bzw. Überwachung eines $CO_2$-Durchbruchs (bzw. eines Durchbruchs der absorptiv zu entfernenden Komponente) durch das Molsieb und/oder eine Messung des Regeniergasaustrittstemperaturverlaufs (sogenannte Ausheizkurve),
- eine Regelung eines oder mehrerer der Tuningparameter aus der Steuerung (die Tuningparameter können hier Stellgrößen sein, vgl. auch unten).

Die erfindungsgemäße Steuerung der Molsieblaufzeit wird bevorzugt durch die insbesondere getaktete Messung der Menge, der Temperatur T, des Druckes p und der $CO_2$-Konzentration des Eintrittsgasgemischs bzw. der Eintrittsluft während der gesamten Laufzeit ermöglicht. Dies erlaubt eine vereinfachte Berechnung der bereits erfolgten Beladung (z.B. durch einen linearisierten Ansatz) und damit ein ständiges Update der noch zur Verfügung stehenden Restlaufzeit.

Die Restlaufzeit kann z.B. wie folgt berechnet werden. Zunächst wird eine bereits erfolgte Beladung B(T) als Funktion der Laufzeit (integrale Größe) berechnet:

$$B(T) := \int_0^T \alpha_{H_2O} \cdot \dot{n}_{H_2O}(t) + \alpha_{CO_2} \cdot \dot{n}_{CO_2}(t) \, dt \qquad (8)$$

mit:

$\alpha_{H_2O}$: Koeffizient Wasser in [$1/mol_{H_2O}$]
$\alpha_{CO_2}$: Koeffizient CO2 in [$1/mol_{CO_2}$]
$\dot{n}_{H_2O}(t)$: Mengenstrom Wasser in [$mol_{H_2O}/s$]
$\dot{n}_{CO_2}(t)$: Mengenstrom CO2 in [$mol_{CO_2}/s$]

Die Koeffizienten für $H_2O$ und $CO_2$ sind Konstanten in der Berechnung bzw. im entsprechenden Programmcode.
Vorzugsweise spätestens wenn die maximale Beladung $B_{max}$ erreicht ist, wird das Molsieb umgeschaltet (d.h. das Eintrittsgasgemisch in ein regeneriertes Molsieb eingeleitet und nicht mehr in das aktuell beladene Molsieb):

$$B(T) = B_{max} \Rightarrow Umschalten$$

mit:

$B_{max}$: Maximale Beladung, im Programmcode als Konstante hinterlegt

Die ständige Berechnung der Restlaufzeit erfolgt beispielsweise wie folgt:

$$T_{Rest} = T \cdot \left(\frac{B_{max}}{B(T)} - 1\right) \quad \forall \; B(T) > 0$$

Der (zeitlich veränderliche) Mengenstrom für $CO_2$ wird insbesondere aus dem gemessenen Gasgemischstrom bzw. Luftstrom und der in der Umgebungsluft gemessenen $CO_2$-Konzentrationen berechnet:

$$\dot{n}_{CO_2}(t) = \dot{n}_{Luft}(t) \cdot c_{CO_2}(t)$$

Der (zeitlich veränderliche) Strom für $H_2O$ wird insbesondere aus dem gemessenen Luftstrom sowie der gemessenen Eintrittstemperaturen und -drücke berechnet:

$$\dot{n}_{H_2O}(t) = \dot{n}_{Luft}(t) \cdot c_{H_2O}(t) = \dot{n}_{Luft}(t) \cdot c_{H_2O}(T(t), p(t))$$

$$c_{H_2O}(T(t), p(t)) \approx \frac{e^{\left(14.07 - \frac{5228}{T(t)}\right)}}{p(t)}$$

Damit ist B(T) eine Integralfunktion der zeitlichen Verläufe der Argumente von f:

$$B(T) = \int_0^T f(\dot{n}_{Luft}, c_{CO_2}, T, p) \, dt$$

Die hier dargestellte Berechnung zeigt den physikalisch einfachsten Ansatz. In der praktischen Ausführungen sind deutlich komplexere Modelle denkbar- das Grundprinzip bleibt dennoch erhalten: Aus gemessenen oder berechneten Mengenströmen sowie Drücken und Temperaturen wird das zeitliche Verhalten des Molsiebes per Modell abgebildet und damit die verbleibende Restlaufzeit prognostiziert.

Ferner erlaubt die Berücksichtigung der real erfolgten Beladung, die im Verfahren berechnet wird (siehe oben) sowie der realen Regeneriergastemperatur eine Berechnung der real benötigten Regeneriergasmenge bzw. der Heizzeit, d.h., der Zeitdauer der Regenerierungsphase, während der das Molsieb mit der berechneten Regeneriergasmenge beaufschlagt wird. Auch hier kann die benötigte Regeneriergasmenge und die Heizzeit mittels eines linearisierten Ansatzes berechnet werden.

$$\dot{n}_{Reg} = B(T) \cdot \frac{\beta_{Reg}}{(T_{Reg} - T_{out}) \cdot \Delta t_{Reg}}$$

mit:

$\beta_{Reg}$: Koeffizient Regeneriergas (RG) in [$mol \cdot K$]
$T_{Reg}$: Eintrittstemperatur RG am MS-Eintritt in [$K$]
$T_{out}$: (zeitlich gemittelte) Austrittstemperatur am MS-Austritt in [$K$]
$\Delta t_{Reg}$: Regenerierzeit in [$s$]

Typischerweise werden Regenerierzeit und Eintrittstemperatur (RG) fest vorgegeben und die Regeneriergasmenge berechnet. Genauso denkbar ist es jedoch, Regenerierzeit oder Eintrittstemperatur (RG) in Abhängigkeit der jeweils zwei anderen Größen zu berechnen.

Die Molsieb-Steuerungsqualität ist ein Maß dafür, wie gut die Steuerung die Molsieb-Laufzeit bzw. -Restlaufzeit und die benötigte Regeneriergasmenge berechnet. Gemäß einer Ausführungsform der Erfindung wird weiterhin - wie eingangs bereits erwähnt - die Überwachung der Steuerung durch eine ständige bzw. fortlaufende Überwachung der Molsieb-Steuerungsqualität ermöglicht, und zwar insbesondere durch Überwachung des $CO_2$-Durchbruchs stromab des Molsiebes.

Hierzu wird bevorzugt der $CO_2$-Gehalt (erster Indikator) des Gasgemischs am Molsiebaustritt gemessen, der am Ende der Laufzeit insbesondere zwischen 4 bis 20 ppb liegen sollte. Ist der $CO_2$-Gehalt größer, so folgt daraus, dass die Laufzeit des Molsiebes zu lang ist. Ist der $CO_2$-Gehalt kleiner, so folgt daraus, dass die Laufzeit des Molsiebes länger sein könnte. Vorzugsweise wird der $CO_2$-Gehalt per Analyse (AI) kontinuierlich gemessen, was zum Standardequipment einer ASU gehört.

Alternativ oder ergänzend kann die Molsieb-Steuerungsqualität durch die Überwachung der sogenannten Ausheizkurven vorgenommen werden.

Nach dem Regenerieren des Molsiebes wird das Molsieb bzw. ein das Molsieb aufweisender Behälter bevorzugt gekühlt, indem dieses bzw. dieser mit einem Regeneriergas durchströmt wird, das z.B. eine Temperatur im Bereich von ca. 20°C aufweist. Hierbei wird vorzugsweise die Austrittstemperatur des aus dem Molsieb austretenden Regeneriergases gemessen und so die Ausheizkurve bestimmt. Die maximale Austrittstemperatur des Regeneriergases aus dem Molsieb soll (kurzzeitig) in einem definierten Intervall liegen, insbesondere ca. 90 - 100°C betragen. Dieser Temperaturbereich der Ausheizkurve ist ein weiterer, zweiter Indikator dafür, dass das Molsieb optimal regeneriert wurde. Liegt der Temperaturwert oberhalb des genannten Temperaturintervalls, kann darauf geschlossen werden, dass zu viel Regenerierungsenergie verwendet worden ist. Liegt der Wert unterhalb des genannten Temperaturintervalls kann darauf geschlossen werden, dass zu wenig Regenerierungsenergie aufgebracht worden ist.

Gemäß einer Variante der Erfindung kann die Regelung der besagten Tuningparameter (vgl. oben) z.B. wie folgt vorgenommen werden. Bei optimaler Beladung des Molsiebes steigt am Ende der Molsieb-Laufzeit die $CO_2$-Konzentration nach dem Molsieb auf ca. 4 - 50ppb. Der $CO_2$-Wert nach dem Molsieb wird per Konzentrationsmessung (AI) kontinuierlich abgegriffen.

Hier setzt nun die Regelung an, bei der vorzugsweise die Führungsgröße (Sollwert) eine bestimmte $CO_2$-Konzentration stromab des Molsiebes ist, insbesondere 5ppb $CO_2$ am Ende der Laufzeit des Molsiebes, und bei der die Regelgröße die gemessene $CO_2$-Konzentration stromab des Molsiebes am Ende der Laufzeit des Molsiebes ist, und wobei die Stellgröße z.B. zumindest ein Tuningparameter $\lambda_{Tuning}$ zum Modifizieren bzw. Justieren der Beladung B(T) des Molsiebes mit $CO_2$ (bzw. der absorptiv zu entfernenden Komponente). Hierbei gilt

$$B'(T) = (1 + \lambda_{Tuning}) \cdot B(T)$$

$$B'(T) = B_{max} \Rightarrow Umschalten$$

D.h., durch die Justierung von $\lambda_{Tuning}$ wird die berechnete Beladung B(T) angepasst. Als Variation ist es genauso möglich, beispielsweise die mittlere $CO_2$-Konzentration über ein Zeitintervall am Ende der Laufzeit, z.B. die letzten 10 Minuten der Laufzeit, oder die integrale $CO_2$-Menge über jenes Zeitintervall (z.B. letzte 10 Minuten der Laufzeit) als Regelgröße/Führungsgröße zu verwenden.

Die Regelung dient insbesondere dazu:

a) Alterungsvorgänge (Jahre bis Jahrzehnte) in der Adsorbenz etc. abzufangen.
b) Modellierungsungenauigkeiten abzufangen.

Im Ergebnis erlaubt das erfindungsgemäße Verfahren eine Optimierung hinsichtlich der OPEX, da nur die wirklich benötigte Regeneriergasenergie verbraucht wird. Weiterhin wird der Anlagenbetrieb bei stark schwanken $CO_2$-Konzentrationen durch die automatisierte Steuerung und ggf. Überwachung des Molsiebes verbessert.

Gemäß einer Ausführungsform der Erfindung weist das Molsieb zumindest einen Temperaturfühler auf, um den Durchbruch der adsorptiv zu entfernenden Komponente voraussagen zu können.

Vorstehend wurde die Erfindung der Einfachheit halber zumeist anhand der absorptiv mit einem Molsieb zu entfernenden Komponente $CO_2$ beschrieben. Die oben beschriebenen Merkmale und Maßnahmen der Erfindung gelten natürlich für andere mit einem Molsieb absorptiv zu entfernende Komponenten entsprechend.

Weitere Merkmale der Erfindung sollen bei der nachfolgenden Beschreibung von Ausführungsbeispielen anhand der Figur erläutert werden. Es zeigen:

Fig. 1      ein Ablaufdiagramm einer Ausführungsform des erfindungsgemäßen Verfahrens; und

Fig. 2      Adsorbereinrichtung mit zwei Molsieben zur Durchführung des erfindungsgemäßen Verfahrens.

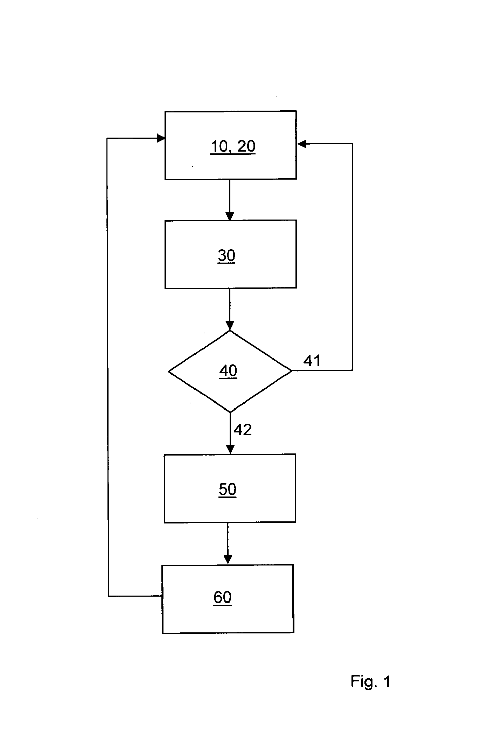

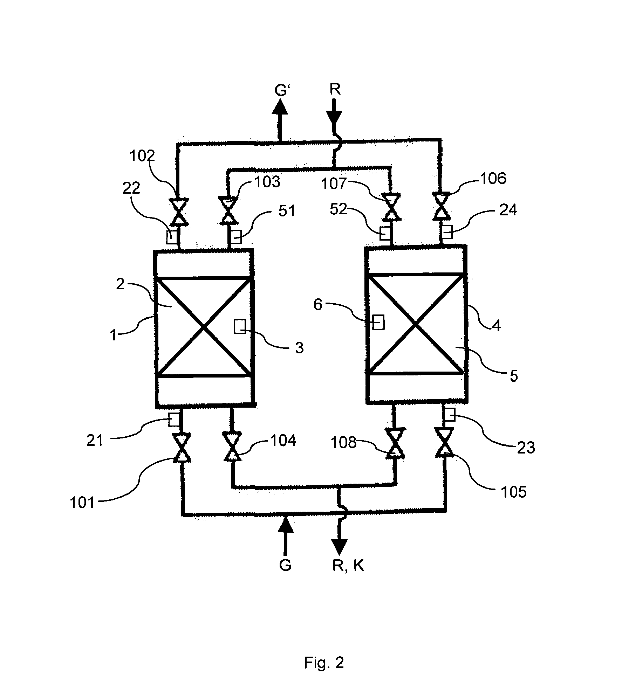

Fig. 1 zeigt im Zusammenhang mit Fig. 2 ein schematisches Ablaufdiagramm eines erfindungsgemäßen Verfahrens, bei dem zur adsorptiven Entfernung einer Komponente K (z.B. $CO_2$) aus einem Gasgemisch G (z.B. Luft) während einer Adsorptionsphase 10 das Gasgemisch G durch ein Molekularsieb 2 geleitet wird und die Komponente K an dem Molekularsieb 2 adsorbiert wird. Während der Adsorptionsphase 10 wird dabei die Menge pro Zeiteinheit n/t, die Temperatur T und der Druck p des Eintrittsgasgemischs G (d.h. des Gasgemischs G stromauf des Molsiebes 2) sowie die Konzentration der Komponente K in dem Eintrittsgasgemisch G wiederholt gemessen 20, wobei mit Hilfe dieser Messwerte die bereits erfolgte bzw. aktuelle Beladung des Molekularsiebes 2 mit der Komponente K sowie eine aktuelle Restlaufzeit $t_{rest}$ des Molekularsiebes 2 berechnet wird 30. Die Restlaufzeit gibt an, wieviel Zeit bis zu einer vordefinierten Endbeladung des Molekularsiebes 2 verbleibt (z.B. bis zur vollständigen Beladung des Molsiebes 2 mit der Komponente K). Es wird regelmäßig überprüft 40, ob die Restlaufzeit abgelaufen ist oder einen bestimmten Schwellwert unterschritten hat. Ist das nicht der Fall, wird die Adsorptionsphase 10 fortgesetzt 41. Andernfalls (42) wird das beladene Molsieb 2 in einer Regenerierungsphase 60 regeneriert. Hierbei wird ein heißes Regeneriergas R durch das Molekularsieb 2 geleitet, so dass die Komponente K wird vom dem Molekularsieb 2 desorbiert wird. Zuvor wird die zur Regenerierung benötigte Regeneriergasmenge $n_R$ sowie die Zeitdauer $t_{reg}$ der Regenerierungsphase 60 unter Berücksichtigung der berechneten Endbeladung des Molekularsiebes 2 sowie der Temperatur $T_R$ des Regeneriergases R berechnet 50. Nach der Regenerierung 60 kann erneut adsorbiert werden 10.

Gemäß Figur 2 kann das erfindungsgemäße Verfahren z.B. mit zwei getrennten Adsorbern 1, 4 durchgeführt werden, die jeweils ein Molsieb 2 bzw. 5 aufweisen. Während der Adsorptionsphase 10 wird dann das eine Molsieb 2 mit der zu entfernenden Komponente K beladen, während das andere Molsieb 5 regeneriert wird. Hierdurch kann im Wesentlichen kontinuierlich ein von der Komponente gereinigtes Produkt G' bzw. Gasgemisch G' abgegeben werden. Mittels Ventilen 101, 102, 105, 106 kann der Eintrittsgasstrom G so geführt werden, dass er lediglich in das momentan adsorbierende Molsieb 2 oder 5 geleitet wird. Ebenso kann der Regeneriergasstrom R mittels Ventilen 103, 104, 107, 108 so geführt werden, dass er jeweils das zu regenerierende Molsieb 2 oder 5 durchströmt. In dem beladenen Regeneriergasstrom R' wird dann die desorbierte Komponente K aus dem jeweiligen Adsorber 1, 4 bzw. Molsieb 1, 5 entfernt, z.B. im Gegenstrom zum Gasgemisch G.

Zum Erfassen der im Eintrittsgasstrom G zum jeweiligen Molsieb 1 bzw. 5 enthaltenden Konzentration der zu entfernenden Komponente K sowie der Menge pro Zeiteinheit, der Temperatur und des Druckes p des Eintrittsgasstromes G ist jeweils stromauf des jeweiligen Molsiebes 2, 5 eine entsprechende Messeinrichtung 21 bzw. 23 vorgesehen.

Eine Überwachung der Steuerung kann z.B. vorgenommen werden, indem stromab des jeweiligen Molsiebes 2, 5 während der Adsorptionsphase 10 die Konzentration der Komponente K im Gasgemisch G gemessen wird, z.B. mit einer entsprechenden Messeinrichtung 22 bzw. 24. Hierdurch kann ein Durchbruch jener Komponente K festgestellt werden und die Steuerung kann entsprechend angepasst werden, z.B. wie oben beschrieben anhand von Tuningparametern.

Weiterhin kann in den Molsieben 2 bzw. 5 jeweils ein Temperaturfühler 3 bzw. 6 vorgesehen sein, mit deren Hilfe ein Durchbruch der Komponente K zur Überwachung der Steuerung vorhersagbar ist.

Sofern festgestellt wird, dass die Restlaufzeit des jeweiligen Molsiebes 2 bzw. 5 abgelaufen ist. Werden die Ventile 101 bis 108 automatisch so gestellt, dass das Gasgemisch G nicht mehr in das beladene Molsieb 2 bzw. 5 gelangt, sondern in das regenerierte Molsieb 5 bzw. 2. Dabei wird die Menge des benötigten Regeneriergases R, das während einer Zeitdauer der Regenerierungsphase 60 durch das jeweilige Molsieb 2 bzw. 5 gegeben wird, automatisch anhand der zuvor berechneten Beladung des jeweiligen Molsiebes 2 bzw. 5 sowie der Temperatur des Regeneriergases R bestimmt. Zur Messung der Temperatur des Regeneriergases R kann stromauf des jeweiligen Molsiebes 2 bzw. 5 eine entsprechende Messeinrichtung 51 bzw. 52 vorgesehen sein.

Bei dem Ausführungsbeispiel gemäß Fig. 2 kann natürlich auch das zweite Molsieb 5 bzw. der zweite Adsorber 4 weggelassen werden. Adsorption und Regeneration wechseln sich dann für das eine Molsieb 2 ab. Weiterhin besteht natürlich die Möglichkeit, bei dem erfindungsgemäßen Verfahren mehr als zwei Molsiebe zu verwenden.

**Bezugszeichenliste**

| | |
|---|---|
| 1, 4 | Adsorber |
| 2, 5 | Molsieb |
| 3, 6 | Temperaturfühler |
| 10 | Adsorption |
| 20 | Messung |
| 21, 22, 23, 24 | Messeinrichtung |
| 30, 50 | Berechnung |
| 51, 52 | Messeinrichtung |
| 60 | Regenerierung |
| 101 bis 108 | Ventile |
| G | Gasstrom/Eintrittsgasstrom |
| G' | Gereinigter Gasstrom |
| R | Regeneriergas |
| R' | Beladenes Regeneriergas |
| K | Adsorptiv zu entfernende Komponente |

**Patentansprüche**

1. Verfahren zur adsorptiven Entfernung einer Komponente (K) aus einem Gasgemisch (G), wobei während einer Adsorptionsphase (10) das Gasgemisch (G) durch ein Molekularsieb (2) geleitet wird und die Komponente (K) an dem Molekularsieb (2) adsorbiert wird, wobei während der Adsorptionsphase (10) die Menge pro Zeiteinheit (n/t), die Temperatur (T) und der Druck (p) des Eintrittsgasgemischs (G) sowie die Konzentration der Komponente (K) in dem Eintrittsgasgemisch (G) wiederholt gemessen (20) werden und mit Hilfe dieser Messwerte die bereits erfolgte Beladung des Molekularsiebes (2) mit der Komponente (K) sowie eine Restlaufzeit ($t_{rest}$) des Molekularsiebes (2) berechnet wird (30), die bis zu einer vordefinierten Endbeladung des Molekularsiebes (2) verbleibt, und wobei anschließend während einer Regenerierungsphase (60) ein heißes Regeneriergas (R) durch das Molekularsieb (2) geleitet wird, und die Komponente (K) vom Molekularsieb (2) desorbiert wird, wobei die zur Regenerierung benötigte Regeneriergasmenge ($n_R$) sowie die Zeitdauer ($t_{reg}$) der Regenerierungsphase (60) unter Berücksichtigung der berechneten Beladung (B(T)) des Molekularsiebes (2) sowie der Temperatur ($T_R$) des Regeneriergases (R) berechnet wird (50).

2. Verfahren nach Anspruch 1, **dadurch gekennzeichnet, dass** ein Durchbruch der Komponente (K) durch das Molekularsieb (2) überwacht wird, insbesondere zur Überwachung einer Steuerungsqualität des Verfahrens.

**3.** Verfahren nach Anspruch 1 oder 2, **dadurch gekennzeichnet, dass** ein Temperaturverlauf eines zum Kühlen des Molekularsiebes (2) verwendeten Regeneriergasstromes stromab des Molekularsiebes (2) gemessen wird, insbesondere zur Überwachung einer Steuerungsqualität des Verfahrens.

**4.** Verfahren nach einem der vorhergehenden Ansprüche, **dadurch gekennzeichnet, dass** die berechnete Beladung (B(T)) mit einem Tuningparameter ($\lambda_{Tuning}$) modifiziert wird, der eine Stellgröße einer Regelung ist, wobei insbesondere bei der Regelung der Tuningparameter so gestellt wird, dass eine am Ende der Adsorptionsphase stromab des Molekularsiebes (2) gemessene Konzentration jener Komponente (K) im Gasgemisch (G) einem vordefinierten Sollwert angenähert wird.

**5.** Verfahren nach einem der vorhergehenden Ansprüche, **dadurch gekennzeichnet, dass** das Gasgemisch (G) Luft ist oder Luft aufweist.

**6.** Verfahren nach einem der vorhergehenden Ansprüche, **dadurch gekennzeichnet, dass** die Komponente (K) $CO_2$ ist.

**7.** Verfahren nach einem der vorhergehenden Ansprüche, **dadurch gekennzeichnet, dass** im Molekularsieb (2) zumindest ein Temperaturfühler (3) angeordnet ist, mit dem die Temperatur im Molekularsieb (2) gemessen wird, um den Durchbruch der adsorptiv zu entfernenden Komponente (K) durch das Molekularsieb (2) zu überwachen.

Fig. 1

Fig. 2

**Europäisches Patentamt**
**European Patent Office**
**Office européen des brevets**

# EUROPÄISCHER RECHERCHENBERICHT

Nummer der Anmeldung

EP 15 00 0818

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 402 809 B1 (MONEREAU CHRISTIAN [FR] ET AL) 11. Juni 2002 (2002-06-11) * Spalte 2, Zeile 66 - Spalte 3, Zeile 6 * * Spalte 3, Zeile 64 - Spalte 4, Zeile 47 * * Spalte 5, Zeile 26 - Spalte 5, Zeile 67 * * Spalte 10, Zeile 58 - Spalte 10, Zeile 63; Ansprüche 1-5,9 * | 1-7 | INV. B01D53/04 |
| X | JP 2014 113594 A (SHINKO AIR WATER CRYOPLANT LTD) 26. Juni 2014 (2014-06-26) * Absätze [0001] - [0006], [0010]; Ansprüche 1-6; Abbildung 2 * | 1-7 | |
| A | EP 0 925 821 A2 (PRAXAIR TECHNOLOGY INC [US]) 30. Juni 1999 (1999-06-30) * Ansprüche 1,3,6 * | 1-7 | |
| A | US 4 832 711 A (CHRISTEL JR CONRAD [US] ET AL) 23. Mai 1989 (1989-05-23) * Spalte 8, Zeile 13 - Spalte 12, Zeile 7 * * Spalte 24, Zeile 11 - Spalte 24, Zeile 20 * | 1-7 | RECHERCHIERTE SACHGEBIETE (IPC) B01D |
| A | EP 0 375 220 A1 (PALL CORP [US]) 27. Juni 1990 (1990-06-27) * Ansprüche 1,3,11-14 * | 1-5,7 | |
| A | DE 197 26 207 A1 (MOTAN HOLDING GMBH [DE]) 24. Dezember 1998 (1998-12-24) * Ansprüche 1,2,4,5 * | 1-5,7 | |

Der vorliegende Recherchenbericht wurde für alle Patentansprüche erstellt

| Recherchenort | Abschlußdatum der Recherche | Prüfer |
|---|---|---|
| München | 17. August 2015 | de Biasio, Arnaldo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 00 0818

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-08-2015

| Im Recherchenbericht angeführtes Patentdokument | Datum der Veröffentlichung | Mitglied(er) der Patentfamilie | Datum der Veröffentlichung |
|---|---|---|---|
| US 6402809 B1 | 11-06-2002 | EP 1080773 A1<br>FR 2798075 A1<br>US 6402809 B1 | 07-03-2001<br>09-03-2001<br>11-06-2002 |
| JP 2014113594 A | 26-06-2014 | KEINE | |
| EP 0925821 A2 | 30-06-1999 | BR 9805413 A<br>CA 2256260 A1<br>EP 0925821 A2<br>ID 22591 A<br>US 5989313 A | 14-12-1999<br>19-06-1999<br>30-06-1999<br>25-11-1999<br>23-11-1999 |
| US 4832711 A | 23-05-1989 | KEINE | |
| EP 0375220 A1 | 27-06-1990 | DE 68923773 D1<br>DE 68923773 T2<br>EP 0375220 A1<br>ES 2075064 T3<br>GB 2225964 A<br>US 4927434 A | 14-09-1995<br>14-12-1995<br>27-06-1990<br>01-10-1995<br>20-06-1990<br>22-05-1990 |
| DE 19726207 A1 | 24-12-1998 | KEINE | |

EPO FORM P0461

Für nähere Einzelheiten zu diesem Anhang : siehe Amtsblatt des Europäischen Patentamts, Nr.12/82